# FASCICULE DE BREVET EUROPEEN

(11) **EP 3 721 123 B1**
(45) Date de publication et mention de la délivrance du brevet: **22.09.2021**
(21) Numéro de dépôt: 18830918.1
(22) Date de dépôt: 05.12.2018
(51) Int. Cl.: F25B 41/35

(54) **VANNE DE RÉGLAGE COMPACTE**
KOMPAKTES STEUERVENTIL
COMPACT CONTROL VALVE

(30) Priorité: 08.12.2017 FR 1761853
(43) Date de publication de la demande: 14.10.2020
(73) Titulaire: Moving Magnet Technologies, 25000 Besançon (FR)
(72) Inventeur: BILLET, Lionel, 25410 Dannemarie sur Crète (FR); DELBAERE, Michaël, 25720 Avanne-Aveney (FR); PREAULT, Valentin, 25000 Besançon (FR); ANDRIEUX, Gaël, 2533 Evilard (CH)
(74) Mandataire: IP Trust
(86) Numéro de dépôt international: PCT/FR2018/053112
(87) Numéro de publication internationale: WO 2019/110923

(56) Documents cités:
- US-A- 4 650 156
- US-A- 4 948 091
- US-B2- 9 525 373

## Description

### DOMAINE TECHNIQUE DE L'INVENTION

L'invention se rapporte à une vanne de réglage compacte, destinée par exemple à un dispositif de détendeur pour circuit de climatisation et dont l'actionnement est réalisé par un moteur électrique sans balai.

La présente invention se destine de manière privilégiée, mais non limitative, au domaine des vannes de réglage de débit pour circuit de climatisation ou de refroidissement de batteries. La particularité de ces systèmes est le besoin de maintenir le fluide caloporteur dans un circuit étanche. La solution généralement adoptée, assurant cette étanchéité tout en permettant un actionnement pérenne, est de séparer la partie fixe, non immergée dans le fluide, d'un moteur électrique sans balai ou d'un solénoïde, généralement le stator du moteur, d'un élément mobile se déplaçant dans le circuit de fluide, la séparation étant réalisée par un élément amagnétique étanche. Le réglage des débits est alors possible sans porter atteinte à l'étanchéité du circuit de réfrigération. Il est demandé à ces systèmes de régulation une grande compacité, une efficience énergétique, une grande précision de commande, et une adaptabilité aux différentes configurations mécaniques du circuit de fluide.

Par les nouvelles normes environnementales et par les besoins liés à l'électrification des véhicules pour des raisons de confort évident, d'efficience et parfois de risque, un accroissement des besoins de précision et de sécurité sur la gestion du système complet de climatisation a fait émerger les demandes d'un retour d'information sur la position du pointeau de réglage de ces vannes d'expansion. Aussi par le besoin d'efficience énergétique, il existe donc un besoin de détection de position de la partie active de la vanne lors du réglage.

Les forces demandées lors du réglage sont relativement importantes rapportées au volume du système, avec un maximum lors de la fermeture du circuit de fluide caloporteur, lorsque le pointeau s'appuie sur le siège de la vanne. Sur le reste du déplacement possible du pointeau, les forces décroissent, la section de passage du fluide étant de plus en plus grande. Il existe donc un intérêt à adapter la force en fonction de la position de la partie active de la vanne dans le but d'une consommation électrique optimisée.

Enfin, ces systèmes sont présents dans les domaines de l'industrie ou de l'habitation, mais également dans le domaine des véhicules automobiles où une nécessité d'intégration compacte est demandée. Il existe donc un besoin de fixation pratique et intégrée de l'actionneur sur le corps de vanne.

### ETAT DE LA TECHNIQUE ANTERIEURE

Dans les documents les plus anciens, il est connu du brevet US 4650156 des vannes d'expansion comportant un moteur électrique à flux radial. Le rotor se déplace hélicoïdalement pendant le fonctionnement, guidé par un système de vis-écrou, la partie vis étant solidaire au rotor et la partie écrou étant fixe et associée au circuit de fluide caloporteur. Le mouvement hélicoïdal du rotor n'est utile que par son déplacement linéaire transmis au pointeau et permettant de réguler le débit du fluide devant passer en phase gazeuse et par conséquent le niveau de refroidissement du système. L'étanchéité est réalisée par un système englobant le stator et le rotor qui sont immergés dans le fluide.

Dans ce même document, le rotor est de longueur axiale plus faible que la longueur axiale du stator. Lors du déplacement, la partie rotorique portant l'aimant reste en face de la matière magnétiquement conductrice du stator, le couple généré par la machine électrique reste donc constant sur l'ensemble de la course. La force générée est donc par conséquent également constante sur la course de l'actionneur. Cette réalisation pose un problème en termes d'encombrement axial avec un besoin de guidage de part et d'autre du rotor ajouté au fait que la hauteur axiale de stator est plus importante que le rotor.

Dans cet état de l'art ancien on trouve aussi, dans le document JP996210733, une méthode de fixation directe de la partie électrique générant la translation sur la partie mécanique dédiée au passage du fluide caloporteur au moyen de vis. Cela permet l'installation de l'ensemble électrique de manière simple et libre en position angulaire, mais ne s'applique que pour un solénoïde à actionnement direct présentant une forme non circulaire. L'encombrement et les performances ne sont donc pas optimaux et il existe des pièces de liaison qui imposent l'empilement axial des fonctions mécaniques, encore préjudiciables à la compacité de l'ensemble.

Plus récemment, la demande US2009/0294713 introduit une vis fixe et un guidage à l'intérieur du rotor du moteur, afin de résoudre les problèmes précédemment cités, mais l'utilisation d'un moteur à flux transverse induit des préjudices à l'ensemble. En effet, la machine à flux transverse présente deux phases électriques superposées axialement. Le déplacement axial du rotor induit un déséquilibre progressif dans le couple généré par chaque phase, de sorte que la régularité du couple total et donc les performances sont dégradées. De plus, l'empilement des phases du moteur transverse pénalise la compacité axiale.

En effet, un moteur à flux transverse présente deux bobines décrivant un tore circulaire dont l'axe est parallèle à l'axe principal du mouvement, associé ici à une transformation vis-écrou. La vis fixe liée à la partie associée aux arrivées de fluide caloporteur est évidée suivant une forme de révolution et suivant l'axe principal du mouvement pour laisser passer le pointeau de réglage de débit, l'écrou étant lié mécaniquement au rotor du moteur. Le rotor du moteur se déplace de manière hélicoïdale lors du fonctionnement de la vanne d'expansion. Il est à noter que, comme dans le brevet US4650156, la longueur axiale du rotor est plus petite que la longueur axiale de la partie statorique.

Plus récemment encore, dans le document US9525373, est décrit un capteur angulaire associé à une vanne équipée d'un moteur à flux transverse, la partie fixe entourant la cloche d'étanchéité décrivant une forme torique de révolution coaxiale à l'axe de la vanne et présentant une sortie latérale. Cependant, ce capteur n'a pour utilité que la détection de butée par perte de synchronisme entre partie mobile du capteur et partie rotor de l'actionneur et non la mesure de la position angulaire absolue dudit rotor. Les performances du capteur doivent être attendues comme mauvaises étant donnée la grande influence des bobines du moteur sur le capteur à effet Hall décrit.

### PROBLEMES DE LA TECHNIQUE ANTERIEURE

Ces dispositifs ont pour objet de résoudre le problème général de régler de manière linéaire un débit de fluide, par exemple caloporteur, en associant un système mécatronique à un circuit de fluide.

Cependant, les dispositifs décrits précédemment présentent toujours une construction qui mène à un encombrement axial important avec soit une transformation de mouvement ainsi que des éléments de guidage situés, axialement, de part et d'autre du moteur électrique, soit une construction du moteur électrique à flux transverse induisant deux bobines superposées.

Dans l'optique de disposer d'un capteur de position analogique, c'est à dire donnant une information proportionnelle à un déplacement, l'utilisation d'un moteur à flux transverse n'est pas idéale car le flux magnétique produit par ces bobines sort largement au-dessus du moteur et perturbe de manière conséquente les performances du capteur lorsque celui-ci est un capteur magnétosensible. De plus, dans aucun de ces brevets n'est introduit de capteur permettant de mesurer le déplacement axial du pointeau ou du rotor. En effet, les solutions électromagnétiques du brevet JP996210733 et de la demande US 2009/0294713 sont toutes deux des topologies magnétiques à flux axial générant des champs magnétiques suivant l'axe de déplacement et perturbant tout capteur magnétosensible.

Dans le document US4650156, l'utilisation d'un capteur n'est pas décrite et n'est pas incitée par la solution utilisée. En effet, l'ensemble du moteur est immergé dans le fluide et l'ajout d'un capteur, d'un circuit de commande et d'un circuit imprimé engendreraient des problèmes d'étanchéité et de sortie de connectique.

Du point de vue de l'encombrement des solutions, les solutions utilisant des moteurs à flux axial présentent généralement des connectiques de sortie latérales qui induisent une empreinte large et un grand encombrement. Dans l'éventualité de l'utilisation d'un capteur de position proche de l'axe du pointeau, les liaisons électriques et mécaniques des différents éléments seraient problématiques du fait de l'éloignement des connectiques des 2 composants.

### EXPOSE DE L'INVENTION

La présente invention vise à pallier les inconvénients de l'état de la technique en réalisant un actionneur plus compact et efficient que ceux de l'art antérieur.

Il est également dans l'objet de l'invention que de permettre optionnellement l'utilisation d'un capteur de position intégré au moteur et qui permet de déterminer la position linéaire du pointeau.

Il est aussi dans l'objet de l'invention de permettre l'utilisation d'un capteur de position intégré au moteur et qui permet de déterminer la position angulaire du rotor du moteur.

Il est encore dans l'objet de l'invention de permettre au moteur de se fixer de manière aisée et rigide sur le corps de vanne sans utilisation de soudure et dans un encombrement limité.

Selon des modes de réalisation particuliers, l'invention a pour objet un dispositif comportant un moteur électrique de forme non entièrement cylindrique permettant de dégager des zones où les moyens de fixations peuvent s'intégrer sans interférer avec les bobines du moteur électrique

Selon d'autres modes de réalisation particuliers, l'invention a pour objet un dispositif comportant un moteur électrique de forme non entièrement cylindrique permettant de dégager des zones où les moyens de fixations peuvent s'intégrer sans interférer avec les bobines du moteur électrique et en dehors du volume décrit par le boitier portant la partie statorique. L'étanchéité du moteur électrique vis-à-vis des projections de fluide extérieur est alors facilitée.

L'invention concerne également l'implémentation d'un capteur de position du pointeau ainsi que d'une solution pour accroitre la précision du capteur axial suivant les variations de température du fluide, en introduisant un élément thermiquement conducteur entre la cloche d'étanchéité où est situé la partie générant le champ magnétique, et la sonde de mesure magnétique située à l'extérieur. Cette dernière peut, par son architecture interne, être compensée en température mais elle est située dans le volume décrit par le boitier, en dehors de la cloche séparant le rotor du stator, et peut en effet connaître une température différente de celle du fluide. La plus grande précision est obtenue quand le gradient de température est minimal entre sonde et élément générateur de champ, la compensation étant alors réalisée sur la variation de champ en température plus précisément connue.

L'invention concerne plus particulièrement une vanne réglage de circulation d'un fluide présentant un corps de vanne et un boitier contenant un moteur électrique composé d'un stator et d'un rotor, un pointeau, une cloche d'étanchéité ainsi qu'une vis fixe ou un écrou fixe, ladite vis fixe ou ledit écrou fixe étant solidaire du corps de vanne, le stator étant solidaire du corps de vanne par l'intermédiaire dudit boitier, la cloche d'étanchéité étant positionnée à l'interface entre le rotor et le stator de manière à ce que la vis/écrou, le rotor et le pointeau soient à l'intérieur de cette cloche et immergés dans ledit fluide, le stator étant isolé dudit fluide, le rotor ayant la fonction d'un écrou ou d'une vis et ayant un mouvement hélicoïdal imposé par ladite vis fixe ou ledit écrou fixe et entrainant le pointeau axialement caractérisée en ce que le moteur est un moteur polyphasé sans balai à flux magnétique principal radial.

Avantageusement elle présente un capteur de position linéaire du pointeau composé d'une sonde magnétosensible solidaire du boitier à l'extérieur de ladite cloche et détectant une composante axiale de champ magnétique, ainsi que d'au moins un élément magnétique solidaire dudit pointeau ou dudit rotor à l'intérieur de ladite cloche et générant ledit champ magnétique et situé à l'intérieur de ladite cloche. Afin de permettre une insensibilité au défaut de positionnement ledit capteur peut présenter un aimant solidaire de la sonde à l'extérieur de la cloche, la direction de l'aimantation de l'aimant étant dans le sens axial de déplacement du pointeau et suivant la même orientation que celle de l'élément magnétique.

Dans une autre implémentation d'un capteur de position linéaire du pointeau, celui-ci est composé d'une sonde magnétosensible solidaire du boitier à l'extérieur de ladite cloche et détectant une composante axiale de champ magnétique, d'au moins un aimant solidaire de ladite sonde à l'extérieur de la cloche et générant ledit champ magnétique ainsi que d'un élément magnétique, sous la forme d'une pièce ferromagnétique douce, solidaire du pointeau et situé à l'intérieur de ladite cloche et modifiant, au niveau de la sonde, les caractéristiques (intensité, direction,...) du champ magnétique émis par ledit aimant.

Dans ces solutions de capteur, alternativement, ladite sonde est positionnée à proximité de la cloche et un élément thermiquement conducteur est placé à l'interface entre ladite sonde et ladite cloche.

**La** vanne peut alternativement présenter un capteur de position angulaire du rotor composé d'une sonde magnétosensible détectant et traitant les deux composantes cartésiennes de champ magnétique ou la phase du vecteur magnétique dans un plan orthogonal à l'axe de déplacement axial du pointeau et à proximité de l'axe de rotation du moteur, ladite sonde étant située à l'extérieur de ladite cloche, ainsi que au moins un élément magnétique générant ledit champ magnétique et situé à l'intérieur de ladite cloche, solidaire dudit rotor.

Dans ce cas, l'élément magnétique émettant le champ est, par exemple, un aimant bipolaire axial.

Pour permettre la fixation de l'actionneur au corps de vanne, l'invention concerne aussi un corps de vanne qui présente une surface d'accueil plane et un boitier fixé audit corps de vanne sur ladite surface d'accueil par des moyens de fixations axiaux, le stator présentant une forme triangulaire et au moins un élément de fixation est placé entre les sommets de ladite forme triangulaire.

Dans ce cas, les éléments de fixation sont alternativement localisés au moins en partie à l'intérieur d'un cercle passant par lesdits sommets de la forme triangulaire ou bien le stator une forme extérieure, au moins en partie, circulaire et au moins un élément de fixation est placé à l'extérieur de la partie statorique du moteur et au moins en partie à l'intérieur d'un cercle inscrit au stator.

### BREVE DESCRIPTION DES FIGURES

D'autres caractéristiques et avantages de l'invention ressortiront à la lecture qui suit d'exemples de réalisation détaillés, en référence aux figures annexées qui représentent respectivement :
- la figure 1, une vue en perspective d'une vanne selon l'invention dans un premier mode de réalisation de l'invention ;
- la figure 2, une vue de dessus et sans couvercle du dispositif de la figure 1 ;
- la figure 3, une vue en coupe longitudinale du dispositif de la figure 1 avec une vue de zone agrandie ;
- la figure 4, une vue en perspective et en coupe partielle du dispositif de la figure 1 ;
- la figure 5, une vue d'une vanne selon l'invention dans un second mode de réalisation de l'invention où le moteur électrique comporte un plus grand nombre de bobines comparé au premier mode ;
- la figure 6, une vue de dessus et en coupe transversale du dispositif de la figure 5;
- la figure 7, une vue en coupe longitudinale et de détail d'une solution présentant une alternative à un capteur de position utilisé dans la présente invention ;
- la figure 8, une vue en coupe longitudinale et de détail d'un mode de réalisation alternatif où le rotor forme une vis et où le capteur utilisé est de principe physique inductif.

### DESCRIPTION DETAILLEE D'UN MODE DE REALISATION

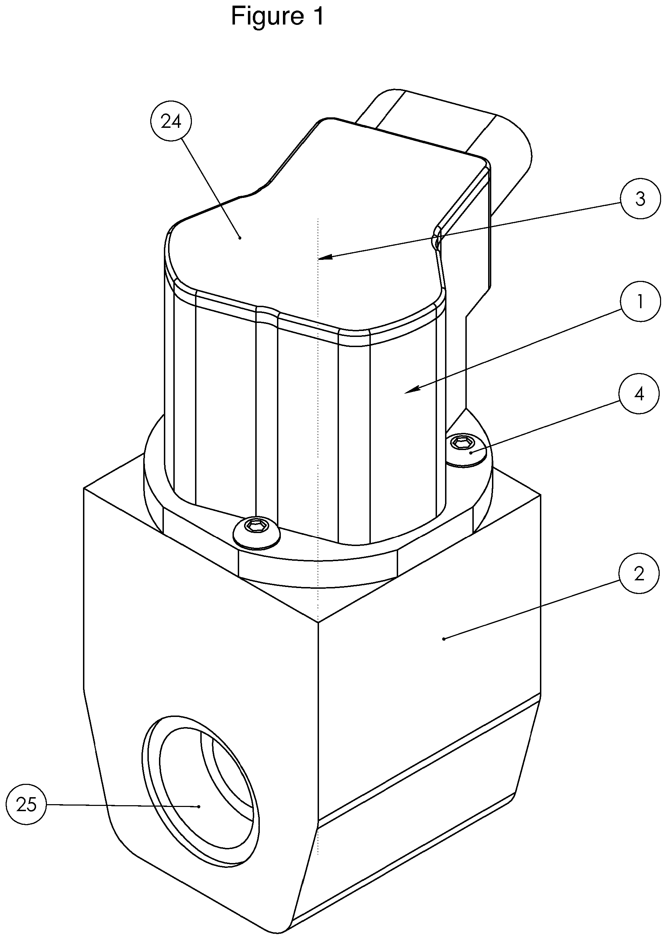

**La** figure 1 représente une vue isométrique d'un premier mode de réalisation d'une vanne selon l'invention, associant un ensemble d'actionnement électrique et un ensemble mécanique créant un chemin de circulation pour un fluide caloporteur. La vanne est ainsi plus particulièrement composée d'un actionneur électrique (1) qui met en translation, suivant l'axe (3) de déplacement, un pointeau (non visible ici) à l'aide d'un moteur électrique. L'actionneur (1) est fixé sur le corps de vanne (2) qui comprend les canaux de passage (25) d'un fluide caloporteur dont le débit est géré par ledit pointeau. L'actionneur électrique (1) comprend un couvercle (24) sur la partie supérieure, et est fixé au corps de vanne (2) par des moyens de fixation axiale (4), tels des vis ou des boulons.

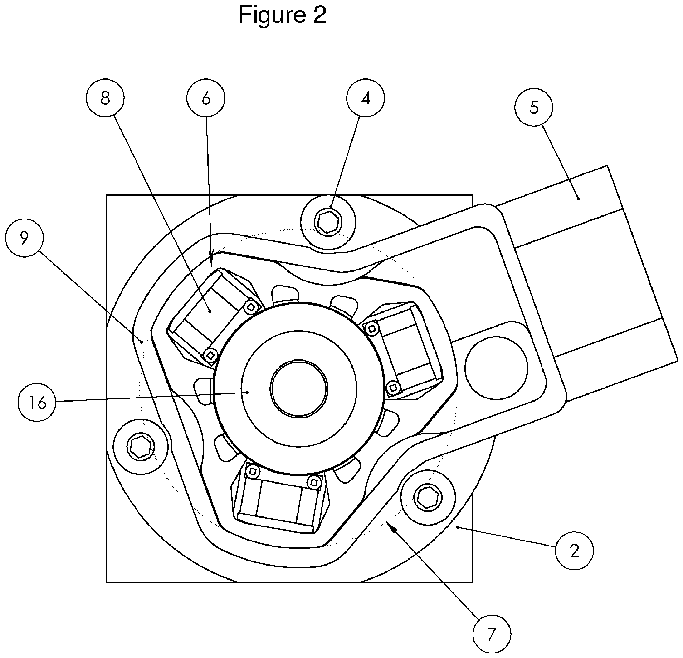

La figure 2 est une vue du dessus du premier mode de réalisation sans couvercle et permettant d'apprécier l'actionneur électrique à flux magnétique radial typiquement utilisé dans la présente invention. Cet actionneur (1) présente un stator (6) formé d'un paquet de tôles formant des dents sur lesquelles sont placées, pour certaines d'entre elles, des bobines électriques (8), ici 3 bobines à 120° les unes des autres. La forme particulière du stator, ici triangulaire, permet de loger des éléments de fixation axiaux (4) sans accroitre l'empreinte globale de l'actionneur sur le corps de vanne (2). La liberté angulaire de positionnement de ces éléments permet l'orientation aisée de l'actionneur, particulièrement de son connecteur (5), selon les besoins de l'ensemble du système de climatisation. Une simple empreinte plane du corps de vanne (2) permet ainsi l'accueil de cet actionneur qui ne présente pas une symétrie de révolution. Particulièrement, le cercle inscrit (7) à la forme triangulaire du stator (6) intersecte fictivement, et en projection axiale, les éléments de fixation (4). L'actionneur (1) est englobé par un boitier (9) qui peut être un logement dans lequel est placé l'actionneur (1) ou bien une matière plastique surmoulée. Dans cette vue sans couvercle (24), on apprécie aussi la présence d'une cloche d'étanchéité (16) à l'intérieur de laquelle est placé le rotor de l'actionneur (1) ainsi que le pointeau à déplacer, ces éléments étant immergés dans le fluide caloporteur. A l'extérieur de cette cloche se trouvent, isolés du fluide caloporteur, le stator (6) et les bobines (8).

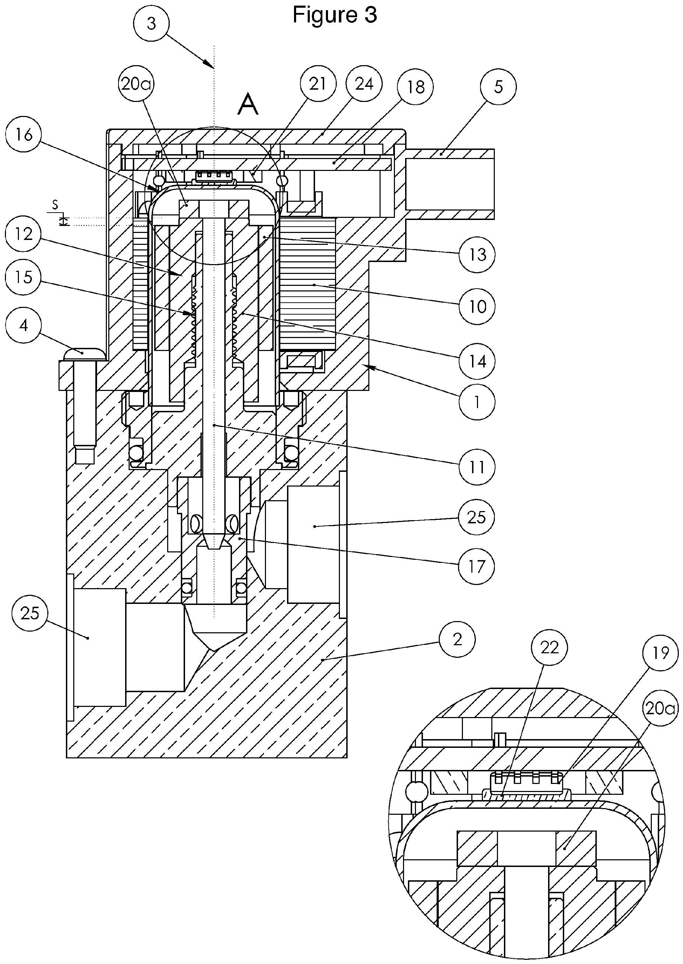

La figure 3 représente une coupe longitudinale d'une vanne selon ce premier mode de réalisation. L'actionneur (1) est vissé sur le corps de vanne (2) à l'aide des éléments de fixation (4). Le corps de vanne (2) présente des canaux (25) de circulation d'entrée et de sortie de fluide caloporteur. Le passage de fluide est géré par le positionnement de l'extrémité du pointeau (11) géré par l'actionneur électrique (1), selon l'axe (3), afin de rapprocher ou d'éloigner cet extrémité de pointeau (11) du siège de pointeau (17). Le rotor (12) est composé d'une partie d'écrou (14) et qui forme ici aussi, dans ce cas particulier de réalisation, la culasse et le support des aimants permanents (13), le rotor mettant en mouvement le pointeau (11) par une liaison ici solidaire mais qui peut être indirecte via un ressort à l'interface (non montré). La partie d'écrou (14) peut être ferromagnétique afin de permettre le guidage du flux magnétique des aimants (13) et avoir une fonction mécanique afin de garantir la viabilité de la transformation de mouvement. Le mouvement du rotor (12) et donc du pointeau (11) est suivant une trajectoire hélicoïdale combinant ainsi une rotation, celle de la machine électrique formée par le rotor (12) et le stator (6), et une translation, imposée par le vissage de la partie d'écrou (14) sur la vis (15) ici fixe et solidaire du corps de vanne (2). Le mouvement est hélicoïdal mais seule la composante de translation est mécaniquement importante pour le réglage de la vanne, le pointeau ayant une géométrie de révolution.

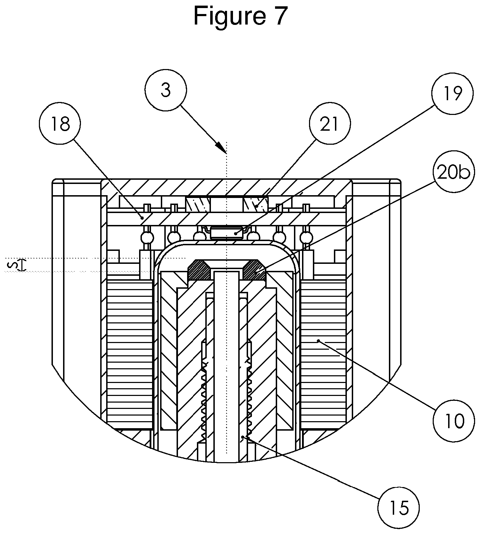

Dans cet exemple de réalisation, la hauteur axiale du rotor (12) est inférieure à celle du paquet de tôles (10) afin que, lors du déplacement du rotor dans son mouvement hélicoïdal, dont la course linéaire S est délimitée sur les figures 3 et 7, le rotor soit toujours en regard radial du stator. Dans le cas de la figure 3, la vanne est montrée en position fermée et le rotor peut donc remonter dans le stator sans changer les surfaces actives en vis-à-vis entre rotor et stator. De ce fait, le couple généré par le moteur et donc la force appliquée au pointeau (11) ne sont pas affectés lors du déplacement. Il est à noter que, si l'on souhaite optimiser la hauteur active, il est possible d'envisager d'augmenter la hauteur de l'aimant à une hauteur supérieure ou égale à celle du paquet de tôles (10) du stator (6), comme illustré en figure 7, ce qui permet éventuellement de moduler la force, pour un courant électrique de commande identique. Lors de la remontée du pointeau (11), les surfaces actives entre rotor et stator sont alors évolutives, ce qui crée un effort variable lors de l'ouverture de la vanne, ce qui permet d'adapter l'actionneur à la décroissance des efforts de pression s'appliquant au pointeau (11).

La configuration présentée ici est particulièrement compacte axialement avec un guidage entièrement prévu dans la hauteur active du paquet de tôles (10), ce guidage étant ici réalisé par la vis (15) en coopération avec l'écrou (14) et par le corps du pointeau (11) avec la surface intérieure de la vis fixe.

Dans cette configuration de la figure 3, et parce que l'utilisation d'un actionneur à flux radial le permet plus aisément, un capteur de position du pointeau (11) est montré. Ce capteur de principe magnétique est situé sur la partie supérieure de la vanne, au-dessus du rotor (12). Un élément magnétique (20a) aimanté, est solidaire de la partie d'écrou (14), donc du rotor (12) et donc du pointeau (11). Cet aimant qui présente une aimantation axiale selon l'axe (3), est lui aussi immergé à l'intérieur de la cloche (16). Lors du déplacement hélicoïdal du rotor (12), cet élément magnétique (20a) s'éloigne donc ou se rapproche du fond de la cloche (16). En regard de la cloche (16) et à l'extérieur de ladite cloche (16) est positionnée sur l'axe (3) une sonde magnétosensible (19) détectant l'amplitude de la composante axiale du champ magnétique sur l'axe (3) émis par l'élément magnétique (20a). L'éloignement ou le rapprochement de cet élément magnétique (20a) relativement à la sonde magnétosensible (19) permet ainsi de moduler l'amplitude de champ détecté par la sonde (19) et de donner l'image de la position du pointeau (11). L'importance est ici donnée à l'axe de sensibilité axial de la sonde (19) car un moteur à flux magnétique radial génère, sur l'axe (3), un champ magnétique de composante axiale bien inférieur à celui crée par un moteur à flux transverse. En effet, ici la composante axiale produite n'est qu'une fuite alors qu'elle est un chemin principal pour le moteur de l'art antérieur.

La sonde (19) est portée par un circuit imprimé (18) située au-dessus de la cloche (16), sous le couvercle (24). Ce circuit imprimé (18) porte également les points de connexion aux bobines (8) de l'actionneur (1) ainsi que des composants électroniques nécessaires au pilotage du moteur électrique polyphasé. Le circuit imprimé (18) supporte aussi, autour de la sonde (19), un aimant de compensation (21) pouvant être optionnellement utilisé afin de régler le niveau moyen d'induction autour du zéro gauss et améliorer ainsi le comportement en température du capteur. L'aimant de compensation présentera, dans ce cas, une direction d'aimantation axiale dans la même direction que la direction de l'aimantation de l'élément magnétique (20a).

L'élément magnétique (20a) générant le champ magnétique axial est réalisé en aimant, à base de Néodyme Fer Bore, de Ferrite ou de Samarium cobalt. Cette dernière matière présente l'avantage d'une variation faible de ses propriétés magnétiques en fonction de la température, minimisant ainsi les dérives du signal du capteur et minimisant l'influence des gradients de température entre le fluide et la sonde de mesure de champ magnétique.

Afin d'améliorer l'homogénéité de température entre la sonde magnétosensible (19) et l'élément magnétique (20a) émetteur de champ qui sont situés respectivement à l'extérieur et à l'intérieur de la cloche (16), et dans le but de permettre une compensation en température plus efficace, il peut être placé à l'interface entre la cloche (16) et la sonde (19) un élément thermiquement conducteur (22) permettant de porter la sonde (19) à une température proche de celle à l'intérieur de la cloche et donc à une température proche de celle de l'élément magnétique (20a).

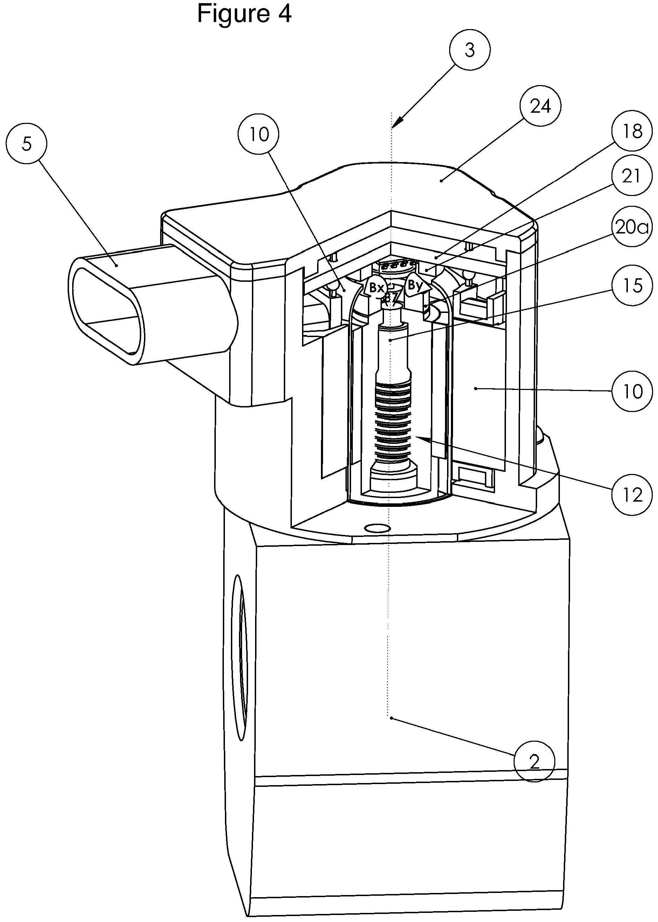

La figure 4 représente une vue en coupe partielle de ce premier mode de réalisation qui permet d'apprécier plus en détail la vis (15) et les composants décrits ci-dessus, notamment une variante du capteur de position. Ce capteur de position peut être utilisé pour, par exemple, piloter le moteur en boucle fermée ou simplement pour connaître la position du pointeau et s'assurer qu'il est dans la position souhaitée. A cette fin, la sonde (19) peut présenter une sensibilité magnétique à l'amplitude des 2 composantes de champ magnétique orthogonales à l'axe de déplacement ou bien une sensibilité à la phase du vecteur de champ magnétique orthogonal à l'axe de déplacement, dans le but de déterminer la position angulaire seule du rotor. La sonde (19) peut aussi présenter une sensibilité magnétique à l'amplitude des 3 composantes de champ magnétique ou une sensibilité aux phases des vecteurs magnétiques de l'élément magnétique (20a) respectivement dans le plan orthogonal à l'axe de déplacement et suivant l'axe de déplacement, dans le but de déterminer à la fois la position angulaire du rotor mais aussi la position axiale. L'utilisation, par exemple, d'une sonde de type MLX90363 permet de mesurer ces trois composantes du champ magnétique. La solution imaginée propose de mesurer les informations de distance axiale de la sonde (19) au rotor (12), avec une sortie de type proportionnelle à cette distance et préférentiellement avec la composante axiale de champ sur l'axe, et de position rotative absolue du rotor (12) sur un tour mécanique, avec une sortie périodique de type sinus/cosinus avec les composantes orthogonales à la composante axiale. Il est également à considérer que la solution permettant la mesure de l'amplitude des 2 composantes de champ magnétique donne indirectement accès aussi à la position axiale par le calcul du module des 2 composantes coplanaires à l'axe de déplacement. Ce module varie en effet en fonction de la distance entre l'élément magnétique (20a) et la sonde (19). L'aimant générant le champ magnétique pouvant, par exemple, être l'élément magnétique (20a) ayant une aimantation bipolaire axiale. On placera alors judicieusement le point de mesure de la sonde (19) par rapport à l'élément magnétique (20a) afin d'exploiter les 2 ou les 3 composantes ou les phases des vecteurs du champ magnétique. La connaissance de la position absolue du rotor (12) sur un tour permet d'envisager son pilotage en boucle fermée, alors que la connaissance de la position axiale du rotor (12) permet de gérer l'ouverture/fermeture du pointeau lié au rotor. La connaissance de la position du rotor seul permet déjà un pilotage plus robuste de type FOC ou sinusoïdal qu'en mode stepper pur.

Afin de s'affranchir plus complétement du champ magnétique produit par le stator, l'utilisation d'une sonde « double die », c'est-à-dire à deux éléments magnétosensibles voisins, peut être envisagée dans le cadre d'une mesure différentielle. Un blindage localisé à proximité des bobines afin de court-circuiter le champ parasite émis par celle-ci et/ou proche de la sonde constitue également une solution encore plus robuste.

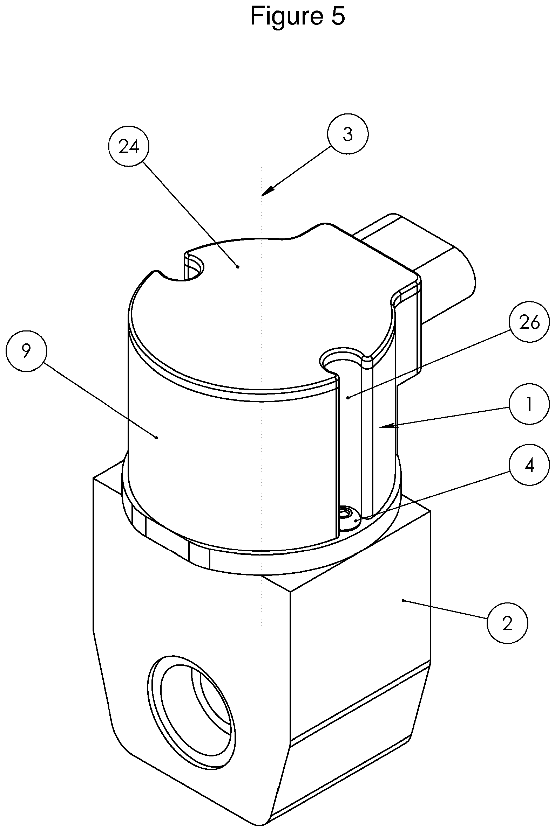

La figure 5 représente une deuxième variante d'utilisation où le moteur utilise un nombre de bobines électriques supérieur à 3 (ici 6 sont montrées), modifiant ainsi l'empreinte extérieure du stator. Cette configuration est avantageuse dans les cas où les besoins de force liés à la régulation du fluide, plus précisément dus aux différences de pressions entre les différents éléments du circuit de fluide, sont importants. L'augmentation du nombre de bobines augmente en effet le facteur de force produit par l'actionneur pour une puissance électrique donnée en entrée de l'actionneur.

Cette deuxième variante se distingue aussi de la première en ce que le boitier (9) présente une forme globalement tubulaire avec deux dégagements axiaux (26) sur la périphérie afin de permettre la fixation à l'aide des éléments de fixation (4).

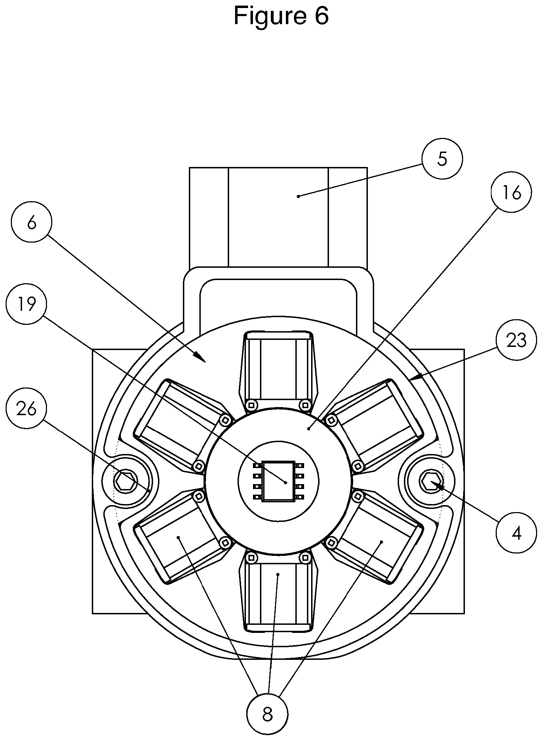

La figure 6 montre le détail du circuit magnétique de l'actionneur (1), les éléments de fixations (4) se localisant à l'intérieur du cercle (23) inscrit à l'extérieur du stator et entre les six bobines (8) de cette partie statorique. Le nombre d'éléments de fixation (4) n'est pas limitatif, ici deux sont montrés mais plus de deux peuvent être envisagés. L'empreinte totale de l'actionneur avec ses éléments de fixation (4) est ainsi minimisée sur le corps de vanne et la forme rectangulaire de celle-ci. Là encore, l'orientation du connecteur (5) peut être variable grâce au principe de positionnement et aux éléments de fixation choisis.

La sonde (19) est montrée isolée au-dessus de ce stator dans une position préférentielle, sur l'axe de déplacement (non montré ici).

La figure 7 montre un exemple de réalisation alternative du capteur de position. Dans ce mode de réalisation du capteur, l'élément magnétique (20b) est un élément ferromagnétique doux n'émettant pas de champ magnétique mais modifiant l'intensité du champ magnétique émis par l'aimant du capteur (21) entourant la sonde (19), et détecté au niveau de la sonde (19) lors du mouvement axial de cet élément magnétique (20b). L'élément magnétique (20b) pouvant se situer aussi bien d'un côté ou de l'autre du circuit imprimé (18) toujours à l'extérieur de la cloche (16). L'avantage de cette solution est de rendre juxtaposés la sonde (19) et l'aimant du capteur (21) afin de permettre une meilleure compensation de la variation du champ magnétique avec la température.

De manière générale, les capteurs décrits dans les exemples précédents sont intégrés sur le rotor mais l'invention s'applique également au cas où l'élément magnétique (20a) ou (20b) est intégré sur l'extrémité haute du pointeau (11).

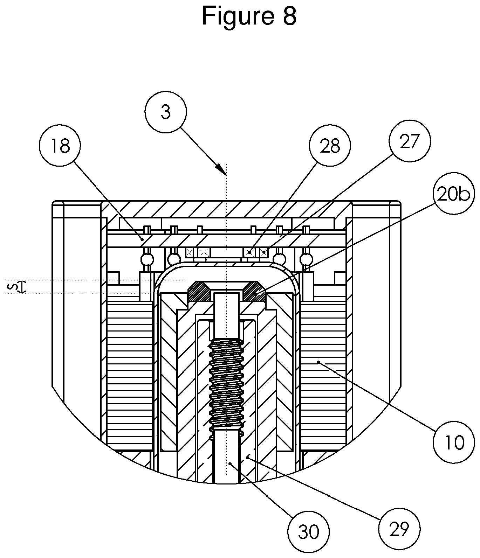

La figure 8 présente un exemple de réalisation alternative du capteur qui peut être utilisé, celui-ci étant sur principe inductif. En effet, ce dernier est composé d'un élément magnétique (20b) passif solidaire du rotor à l'intérieur de la cloche et de deux bobines électriques (27, 28). Le principe général, classique pour un capteur inductif, est le suivant :
- une première bobine (27) émet un champ magnétique variable,
- une deuxième bobine (28) reçoit un champ magnétique variable par couplage inductif,
- l'élément magnétique (20b) modifie le couplage inductif entre les bobines (27, 28) lors de son éloignement ou rapprochement axial des bobines (27, 28). Cette modification du couplage induit une réponse différente -par exemple en termes de phasage ou d'amplitude de signal de signal détecté- au niveau de la bobine (28) qui permet de mettre en relation signal détecté et position.

La figure 8 présente aussi un exemple de réalisation alternative de couplage du rotor avec le corps de vanne (2). Dans cet exemple, le rotor est solidaire du pointeau (11) qui forme une vis (30) qui coopère avec un écrou fixe (29) lié au corps de vanne (2). Ceci est à la différence des exemples précédents où le rotor forme un écrou et coopère avec une portion de vis fixe liée au corps de vanne (2). L'invention n'est en effet pas limitée en termes de fonctions vis/écrou qui peuvent être réalisées indifféremment par le rotor ou au niveau du corps de vanne (2).

Dans les tous les exemples présentés ici, qui ne sont pas limitatifs, il est évident que les solutions de capteurs ne sont pas limitées au choix d'utilisation de vis ou écrou au niveau du rotor ou du corps de vanne (2) et il peut être envisagé de prendre une solution de capteur et de l'adapter à l'une ou l'autre de solutions mécaniques envisagées.

## Revendications

1. Vanne de réglage de circulation d'un fluide présentant un corps de vanne (2) et un boitier (9) contenant un moteur électrique composé d'un stator (6) et d'un rotor (12), un pointeau (11), une cloche d'étanchéité (16) ainsi qu'une vis fixe ou un écrou fixe (15), ladite vis fixe ou ledit écrou fixe (15) étant solidaire du corps de vanne (2), le stator étant solidaire du corps de vanne (2) par l'intermédiaire dudit boitier, la cloche d'étanchéité (16) étant positionnée à l'interface entre le rotor (12) et le stator (6) de manière à ce que la vis/écrou, le rotor (12) et le pointeau soient à l'intérieur de cette cloche (16) et immergés dans ledit fluide, le stator (6) étant isolé dudit fluide, le rotor (12) ayant la fonction d'un écrou ou d'une vis et ayant un mouvement hélicoïdal imposé par ladite vis fixe ou ledit écrou fixe (15) et entrainant le pointeau axialement **caractérisée en ce que** le moteur est un moteur polyphasé sans balai à flux magnétique principal radial.

2. Vanne de réglage selon la revendication 1 **caractérisée en ce qu'**elle présente un capteur de position linéaire du pointeau composé d'une sonde magnétosensible (19) solidaire du boitier à l'extérieur de ladite cloche (16) et détectant une composante axiale de champ magnétique, ainsi que d'au moins un élément magnétique (20a) solidaire dudit pointeau ou dudit rotor (12) à l'intérieur de ladite cloche et générant ledit champ magnétique.

3. Vanne de réglage selon la revendication 1 **caractérisée en ce qu'**elle présente un capteur de position linéaire du pointeau composé d'une sonde magnétosensible (19) solidaire du boitier à l'extérieur de ladite cloche et détectant une composante axiale de champ magnétique, d'au moins un aimant (21) solidaire de ladite sonde à l'extérieur de la cloche et générant ledit champ magnétique ainsi que d'un élément magnétique (20b), sous la forme d'une pièce ferromagnétique douce, solidaire du pointeau et situé à l'intérieur de ladite cloche et modifiant, au niveau de la sonde, les caractéristiques du champ magnétique émis par ledit aimant.

4. Vanne de réglage selon la revendication 2 **caractérisée en ce que** ledit capteur présente un aimant (21) solidaire de la sonde à l'extérieur de la cloche, la direction de l'aimantation de l'aimant (21) étant dans le sens axial de déplacement du pointeau et suivant la même orientation que celle de l'élément magnétique (20a).

5. Vanne de réglage selon l'une des revendications 2 à 4 **caractérisée en ce que** ladite sonde est positionnée à proximité de la cloche et **en ce qu'**un élément thermiquement conducteur (22) est placé à l'interface entre ladite sonde et ladite cloche.

6. Vanne de réglage selon l'une quelconque des revendications précédentes **caractérisée en ce qu'**elle présente un capteur de position angulaire du rotor (12) composé d'une sonde magnétosensible (19) détectant et traitant les deux composantes cartésiennes de champ magnétique ou la phase du vecteur magnétique dans un plan orthogonal à l'axe de déplacement axial du pointeau et à proximité de l'axe de rotation du moteur, ladite sonde étant située à l'extérieur de ladite cloche, ainsi que au moins un élément magnétique (20a) solidaire dudit rotor (12) générant ledit champ magnétique et situé à l'intérieur de ladite cloche.

7. Vanne de réglage selon la revendication précédente **caractérisée en ce que** l'élément magnétique émettant le champ est un aimant bipolaire axial.

8. Vanne de réglage selon l'une quelconque des revendications précédentes **caractérisée en ce que** ledit corps de vanne (2) présente une surface d'accueil plane et **en ce que** ledit boitier est fixé audit corps de vanne (2) sur ladite surface d'accueil par des moyens de fixations axiaux (4), **en ce que** le stator (6) présente une forme triangulaire et **en ce qu'**au moins un élément de fixation est placé entre les sommets de ladite forme triangulaire.

9. Vanne de réglage selon la revendication précédente **caractérisée en ce que** les éléments de fixation sont localisés au moins en partie à l'intérieur d'un cercle (23) passant par lesdits sommets de la forme triangulaire.

10. Vanne de réglage selon l'une quelconque des revendications 1 à 7 **caractérisée en ce que** ledit corps de vanne (2) présente une surface d'accueil plane et **en ce que** ledit boitier est fixé audit corps de vanne (2) sur ladite surface d'accueil par des moyens de fixations axiaux (4), **en ce que** le stator (6) présente une forme extérieure, au moins en partie, circulaire et **en ce qu'**au moins un élément de fixation est placé à l'extérieur de la partie statorique du moteur et au moins en partie à l'intérieur d'un cercle (23) inscrit au stator (6).

## Patentansprüche

1. Fluidzirkulationsregelventil, das einen Ventilkörper (2) und ein Gehäuse (9) aufweist, das einen Elektromotor umfasst, der aus einem Stator (6) und einem Rotor (12), einer Nadel (11), einer Dichtungsglocke (16) sowie einer festen Schraube oder einer festen Mutter (15) besteht, wobei die feste Schraube oder die feste Mutter (15) fest mit dem Ventilkörper (2) verbunden ist, wobei der Stator durch das Gehäuse fest mit dem Ventilkörper (2) verbunden ist, die Dichtungsglocke (16) an der Grenzfläche zwischen dem Rotor (12) und dem Stator (6) positioniert ist, so dass die Schraube/Mutter, der Rotor (12) und die Nadel in dem Inneren dieser Glocke (16) sind und in das Fluid eingetaucht sind, der Stator (6) von dem Fluid isoliert ist, der Rotor (12) die Funktion einer Mutter oder einer Schraube besitzt und eine spiralförmige Bewegung besitzt, die ihm von der festen Schraube oder der festen Mutter (15) aufgezwungen wird und die Nadel axial antreibt, **dadurch gekennzeichnet, dass** der Motor ein Mehrphasenmotor ohne Bürste mit hauptsächlich radialem Magnetfluss ist.

2. Regelventil nach Anspruch 1, **dadurch gekennzeichnet, dass** es einen Sensor für eine lineare Position der Nadel, der aus einer magnetisch beeinflussbaren Sonde (19) besteht, die mit dem Gehäuse außerhalb der Glocke (16) fest verbunden ist und eine axiale Komponente des Magnetfeldes erfasst, sowie wenigstens ein magnetisches Element (20a) aufweist, das mit der Nadel oder dem Rotor (12) innerhalb der Glocke fest verbunden ist und das Magnetfeld erzeugt.

3. Regelventil nach Anspruch 1, **dadurch gekennzeichnet, dass** es einen Sensor für eine lineare Position der Nadel, der aus einer magnetisch beeinflussbaren Sonde (19) besteht, die mit dem Gehäuse außerhalb der Glocke fest verbunden ist und eine axiale Komponente des Magnetfeldes erfasst, wenigstens einen Magneten (21), der mit der Sonde außerhalb der Glocke fest verbunden ist und das Magnetfeld erzeugt, sowie ein Magnetelement (20b) aufweist, in Form eines weichen ferromagnetischen Teils, das fest mit der Nadel verbunden ist und in dem Inneren der Glocke liegt und die Eigenschaften des Magnetfelds, das durch den Magneten abgegeben wird, auf Höhe der Sonde modifiziert.

4. Regelventil nach Anspruch 2, **dadurch gekennzeichnet, dass** der Sensor einen Magneten (21) aufweist, der fest mit der Sonde außerhalb der Glocke verbunden ist, wobei die Magnetisierungsrichtung des Magneten (21) in der axialen Bewegungsrichtung der Nadel ist und derselben Ausrichtung wie jener des Magnetelements (20a) folgt.

5. Regelventil nach einem der Ansprüche 2 bis 4, **dadurch gekennzeichnet, dass** die Sonde in der Nähe der Glocke positioniert ist und dass ein wärmeleitendes Element (22) an der Grenzfläche zwischen der Sonde und der Glocke positioniert ist.

6. Regelventil nach einem der vorhergehenden Ansprüche, **dadurch gekennzeichnet, dass** es einen Sensor einer Winkelposition des Rotors (12), der aus einer magnetisch beeinflussbaren Sonde (19) besteht, die die zwei kartesischen Komponenten des Magnetfelds oder die Phase des magnetischen Vektors in einer Ebene, die orthogonal zu der Achse der axialen Bewegung der Nadel und in der Nähe der Drehachse des Motors ist, erfasst und verarbeitet, wobei die Sonde außerhalb der Glocke liegt, sowie wenigstens ein Magnetelement (20a) aufweist, das fest mit dem Rotor (12) verbunden ist, das das Magnetfeld erzeugt und im Inneren der Glocke liegt.

7. Regelventil nach dem vorhergehenden Anspruch, **dadurch gekennzeichnet, dass** das Magnetelement, das das Feld abgibt, ein axialer bipolarer Magnet ist.

8. Regelventil nach einem der vorhergehenden Ansprüche, **dadurch gekennzeichnet, dass** der Ventilkörper (2) eine ebene Anbringungsfläche aufweist und dass das Gehäuse an dem Ventilkörper (2) an der Anbringungsfläche durch axiale Befestigungsmittel (4) befestigt ist, dass der Stator (6) eine dreieckige Form aufweist und dass wenigstens ein Befestigungselement zwischen den Scheiteln der dreieckigen Form liegt.

9. Regelventil nach dem vorhergehenden Anspruch, **dadurch gekennzeichnet, dass** die Befestigungselemente wenigstens teilweise im Inneren eines Kreises (23) verortet sind, der durch die Scheitel der dreieckigen Form verläuft.

10. Regelventil nach einem der Ansprüche 1 bis 7, **dadurch gekennzeichnet, dass** der Ventilkörper (2) eine ebene Anbringungsfläche aufweist und dass das Gehäuse an dem Ventilkörper (2) an der Anbringungsfläche durch axiale Befestigungsmittel (4) befestigt ist, dass der Stator (6) eine äußere Form aufweist, die wenigstens teilweise kreisförmig ist, und dass wenigstens ein Befestigungselement außerhalb des Statorteils des Motors und wenigstens teilweise im Inneren eines um den Stator (6) gezogenen Kreises (23) liegt.

## Claims

1. Valve for regulating the circulation of a fluid, comprising a valve body (2), a housing (9) containing an electric motor consisting of a stator (6) and a rotor (12), a needle (11), a sealing bell (16), and a fixed screw or a fixed nut (15), said fixed screw or said fixed nut (15) being rigidly connected to the valve body (2), the stator being rigidly connected to the valve body (2) via said housing, the sealing bell (16) being positioned at the interface between the rotor (12) and the stator (6) such that the screw/nut, the rotor (12), and the needle are inside said bell (16) and submerged in said fluid, the stator (6) being isolated from said fluid, and the rotor (12) having the function of a nut or a screw, having a helical movement imposed by said fixed screw or said fixed nut (15), and driving the needle axially, **characterized in that** the motor is a polyphase brushless motor with a radial main magnetic flux.

2. Regulating valve according to claim 1, **characterized in that** it has a sensor for the linear position of the needle consisting of a magnetosensitive probe (19), which is rigidly connected to the housing outside said bell (16) and detects an axial component of the magnetic field, and of at least one magnetic element (20a), which is rigidly connected to said needle or to said rotor (12) inside said bell and generates said magnetic field.

3. Regulating valve according to claim 1, **characterized in that** it has a sensor for the linear position of the needle consisting of a magnetosensitive probe (19), which is rigidly connected to the housing outside said bell and detects an axial component of the magnetic field, of at least one magnet (21), which is rigidly connected to said probe outside the bell and generates said magnetic field, and of a magnetic element (20b), which is in the form of a soft ferromagnetic part, is rigidly connected to the needle, is located inside said bell, and modifies, at the probe, the characteristics of the magnetic field emitted by said magnet.

4. Regulating valve according to claim 2, **characterized in that** said sensor has a magnet (21) that is rigidly connected to the probe outside the bell, the direction of the magnetization of the magnet (21) being in the axial direction of movement of the needle and following the same orientation as that of the magnetic element (20a).

5. Regulating valve according to any of claims 2 to 4, **characterized in that** said probe is positioned close to the bell, and **in that** a thermally conductive element (22) is placed at the interface between said probe and said bell.

6. Regulating valve according to any of the preceding claims, **characterized in that** it has a sensor for the angular position of the rotor (12) consisting of a magnetosensitive probe (19), which detects and processes the two Cartesian components of the magnetic field or the phase of the magnetic vector in a plane orthogonal to the axis of axial movement of the needle and close to the axis of rotation of the motor, said probe being located outside said bell, and of at least one magnetic element (20a), which is rigidly connected to said rotor (12), generates said magnetic field, and is located inside said bell.

7. Regulating valve according to the preceding claim, **characterized in that** the magnetic element producing the field is a bipolar axial magnet.

8. Regulating valve according to any of the preceding claims, **characterized in that** said valve body (2) has a flat receiving surface, **in that** said housing is fixed to said valve body (2) on said receiving surface by axial fixing means (4), **in that** the stator (6) has a triangular shape, and **in that** at least one fixing element is placed between the vertices of said triangular shape.

9. Regulating valve according to the preceding claim, **characterized in that** the fixing elements are located at least partly inside a circle (23) that passes through said vertices of the triangular shape.

10. Regulating valve according to any of claims 1 to 7, **characterized in that** said valve body (2) has a flat receiving surface, **in that** said housing is fixed to said valve body (2) on said receiving surface by axial fixing means (4), **in that** the stator (6) has an outer shape that is at least partly circular, and **in that** at least one fixing element is placed outside the stator part of the motor and at least partly inside a circle (23) inscribed on the stator (6).
